# EUROPEAN PATENT APPLICATION

(11) **EP 3 205 431 A1**
(43) Date of publication of application: **16.08.2017**
(21) Application number: 15848886.6
(22) Date of filing: 30.03.2015
(51) Int. Cl.: B23C 5/10

(54) **RADIUS END MILL**

(30) Priority: 07.10.2014 JP 2014206297
(71) Applicant: Mitsubishi Materials Corporation, Chiyoda-ku Tokyo 100-8117 (JP)
(72) Inventor: FUKATA, Koji, Uozumi-cho Akashi-shi Hyogo 674-0071 (JP)
(74) Representative: Hoffmann Eitle
(86) International application number: PCT/JP2015/059973
(87) International publication number: WO 2016/056266

(57) **Abstract**

Disclosed is a radius end mill (10) equipped with end cutting edges (7) formed such that rotational locus thereof around an axial line (O) draw a protruded curved face. That is, the protruded curved face is formed so as to have a protruded curved face where a curvature radius in an inner portion located closer to an axial line side than a tip outer-peripheral side of an end mill body (1) is greater than a curvature radius on the tip outer-peripheral side, in a sectional view along the axial line. A gash depth angle θ (°) calculated by θ = tan⁻¹ (A/B) on the basis of a distance A (mm) in an axial direction from a protruded end (7A) of an end cutting edge to a most-posterior end of a gash (6) and a radius B (mm) from the axial line to a contact point (7B) between a peripheral cutting edge (5) and the end cutting edge is set to be 50° or less. A sum (θ (°) + α (°)) of the gash depth angle θ (°) and an axial rake angle difference α (°) = (α2 (°) - α1 (°)) between an axial rake angle α2 (°) of the end cutting edge at the contact point and an axial rake angle α1 (°) of the end cutting edge at the protruded end is set to be 60° or more.

## Description

### Technical Field

The present invention relates to a radius end mill in which an end cutting edge coming in contact with a tip of a peripheral cutting edge is formed at a tip of an end mill body by extending to a posterior end side as it becomes closer to an outer peripheral side of the end mill body while a rotational locus thereof around an axial line draws a protruded curved face.

In particular, the present invention relates to a radius end mill in which the curvature radius of a convex curve formed by the above protruded curved face that the end cutting edge draws in a section along the above axial line is made to be greater on a tip inner-peripheral side of an end mill body than on a tip outer-peripheral side.

Priority is claimed on Japanese Patent Application No. 2014-206297, filed October 7, 2014, the content of which is incorporated herein by reference.

### Background Art

As such a radius end mill, an end mill having a peripheral cutting edge, and an end cutting edge consisting of a circular-arc edge that is in a curved line as seen from a direction perpendicular to a tool shaft, and a concave gradient edge that is in a straight line or the curved line continuous with the circular-arc edge is suggested, for example, in PTL 1.

In this end mill, the end cutting edge and the peripheral cutting edge are connected together via a substantially circular-arc R edge formed with a curvature radius in a range of 0.02 to 0.2 times the tool radius.

### Citation List

### Patent Literature

[PTL 1] Japanese Unexamined Patent Application, First Publication No. 2013-31911 (FIG. 25)

### Summary of Invention

### Technical Problem

In a case where such a radius end mill performs cutting at an inner-peripheral-side portion (inner portion) of the end cutting edge with a large curvature radius, cutting edge length becomes large and the thickness of chips becomes small. For that reason, the radius end mill has a longer life while allowing higher-efficiency cutting work compared to ordinary radius end mills in which a linear end cutting edge is connected to a peripheral cutting edge via a corner edge having a single radius.

However, in the case of deep milling work such that cutting also including the outer-peripheral-side portion of the end cutting edge is performed, the curvature radius of the outer-peripheral-side portion of the end cutting edge in the radius end mill becomes smaller compared to corner edges of the ordinary radius end mills. Therefore, it is difficult to sufficiently guarantee strength. For that reason, chipping is apt to occur particularly at a contact point between the end cutting edge and the peripheral cutting edge.

It is believed that such chipping at the contact point between the end cutting edge and the peripheral cutting edge is caused by vibration of the end mill body in a radial direction during cutting. That is, if the vibration in the radial direction is generated, the end cutting edge with insufficient strength as described above is intermittently hit on a workpiece and is apt to be chipped, at the contact point between the end cutting edge, and the peripheral cutting edge located at an outermost periphery of the end cutting edge.

Thus, in order to suppress such vibration to prevent the chipping, a method is considered which enlarges the axial rake angle of the end cutting edge at a position of this contact point on a positive angle side to increase sharpness and thus to reduce resistance in the radial direction.

However, generally, the end cutting edge of such a radius end mill is formed at a tip-side ridge portion of a gash. In addition, the gash is formed at a tip portion of a chip discharge groove in which the peripheral cutting edge is formed.

Since the end cutting edge is formed at the tip-side ridge portion of the gash as described above, if the axial rake angle at the contact point between the end cutting edge and the peripheral cutting edge located at the outermost periphery of the end cutting edge is to be enlarged to the positive angle side, the width of the gash in a circumferential direction become larger also in an end mill-rotational direction.

For that reason, there is a concern that the thickness of an adjacent end cutting edge in the end mill-rotational direction or the thickness of a tip portion of the end mill body connected to the side of the peripheral cutting edge opposite to the end mill-rotational direction may become small. Accordingly, there is a concern that the strength of the end cutting edge or the peripheral cutting edge may be impaired, or the gash reaches even a flank face of an adjacent peripheral cutting edge in the end mill-rotational direction depending on the case, and may causes interference.

The invention has been made under such a background and an object thereof is to provide a radius end mill that can enlarge an axial rake angle at a contact point between an end cutting edge and a peripheral cutting edge to reduce resistance, thereby suppressing vibration in a radial direction to prevent chipping while preventing the strength of the end cutting edge or the peripheral cutting edge from being impaired or preventing a gash from interfering with a flank face of the peripheral cutting edge when a gash becomes broader.

### Solution to Problem

(1) A radius end mill according to a first aspect of the invention is a radius end mill including an end mill body that rotates around an axial line; a chip discharge groove that is formed at an outer periphery of a tip portion of the end mill body and is twisted to a side opposite to an end mill-rotational direction around the axial line from a tip of the end mill body toward a posterior end side thereof; a peripheral cutting edge that is formed at an outer-peripheral-side ridge portion of a wall face of the chip discharge groove that faces the end mill-rotational direction; a recessed groove-shaped gash that is formed at a tip portion of the chip discharge groove and extends toward the posterior end side as it becomes closer to an outer peripheral side of the end mill body; and an end cutting edge that is formed at a tip-side ridge portion of a wall face of the gash that faces the end mill-rotational direction and extends to the posterior end side as it becomes closer to the outer peripheral side of the end mill body, thereby coming in contact with a tip of the peripheral cutting edge. The end cutting edge is formed such that a rotational locus thereof around the axial line draws a protruded curved face. The protruded curved face is formed so as to have a convex curve where a curvature radius in an inner portion located closer to an axial line side than a tip outer-peripheral side of the end mill body is greater than a curvature radius on the tip outer-peripheral side, in a sectional view along the axial line. A gash depth angle θ (°) calculated by θ = tan⁻¹ (A/B) on the basis of a distance A (mm) in the axial direction from a protruded end of the end cutting edge located on a tip side in the axial direction to a most-posterior end of the gash and a radius B (mm) from the axial line to a contact point between the peripheral cutting edge and the end cutting edge is set to be 50° or less. A sum (θ (°) + α (°)) of the gash depth angle θ (°) and an axial rake angle difference α (°) = (α2 (°) - α1 (°)) between an axial rake angle α2 (°) of the end cutting edge at the contact point and an axial rake angle α1 (°) of the end cutting edge at the protruded end is set to be 60° or more.

In the radius end mill configured in this way, the gash depth angle θ (°) calculated by θ = tan⁻¹ (A/B) on the basis of the distance A (mm) in the axial direction from the protruded end of the end cutting edge in the axial direction to the most-posterior end of the gash and the radius B (mm) from the axial line to the contact point between the peripheral cutting edge and the end cutting edge is small to be 50° or less. In addition, the gash depth angle θ represents a depth to the posterior end side in the axial direction in the recessed groove-shaped gash that extends toward the posterior end side as it becomes closer to the outer peripheral side of the end mill body.

Since gash depth angle θ (°) is as small as 50° or less, even if the axial rake angle at the contact point between the end cutting edge and the peripheral cutting edge is enlarged on a positive angle side, it is possible to avoid the width of the gash becoming greater than needed. Therefore, it is possible to avoid the gash of the end cutting edge largely reducing the thickness of another end cutting edge or another peripheral cutting edge adjacent to the end mill-rotational direction side or interfering with the flank face of this peripheral cutting edge.

However, if the gash is made shallow by making the gash depth angle θ small, there is a concern that chips generated by the end cutting edge are clogged within the gash and an increase in the rotational driving force of the end mill is caused.

In contrast, in the present invention, the sum (θ (°) + α (°)) of the gash depth angle θ (°) and the axial rake angle difference α (°) = (α2 (°) - α1 (a)) between the axial rake angle α2 (°) of the end cutting edge at the contact point between the end cutting edge and the peripheral cutting edge and the axial rake angle α1 (°) at the protruded end of the end cutting edge is set to be 60° or more.

Accordingly, the axial rake angle difference α (°) can be at least 10°, and the axial rake angle difference α (°) can be enlarged as the gash depth angle θ (°) becomes smaller.

For this reason, by virtue of the difference between the axial rake angle of the protruded end of the end cutting edge and the axial rake angle of the outer peripheral end that is the contact point of the end cutting edge and the peripheral cutting edge, the chips generated by the end cutting edge can be discharged to the chip discharge groove so as to be bent. Therefore, even if the depth of the gash becomes small, it is possible to guarantee good chip discharge performance.

In addition, in order to much more reliably exhibit such effects, it is desirable that the sum (θ (°) + α (°)) of the gash depth angle θ (°) and the axial rake angle difference α (°) = (α2 (°) - α1 (°)) is 80 degrees or more.

### Advantageous Effects of Invention

According to the invention, in the high-efficiency long-life radius end mill in which the curvature radius of the end cutting edge on a tip inner-peripheral side (inner portion) of the end mill body is made to be greater than that on a tip outer-peripheral side, even in a case where even the outer peripheral end of the end cutting edge is used for cutting, it is possible to perform stable cutting work that prevents chipping or the like resulting from vibration.

### Brief Description of Drawings

FIG. 1 is a perspective view illustrating a tip portion of a radius end mill of an embodiment of the invention.
FIG. 2 is an enlarged front view of the radius end mill illustrated in FIG. 1.
FIG. 3 is a side view of the radius end mill as seen in a direction of arrow X in FIG. 2.
FIG. 4 is a side view of the radius end mill as seen in a direction of arrow Y in FIG. 2.
FIG. 5 is a sectional view of the radius end mill, and is a ZZ sectional view in FIGS. 2 and 3.

### Description of Embodiments

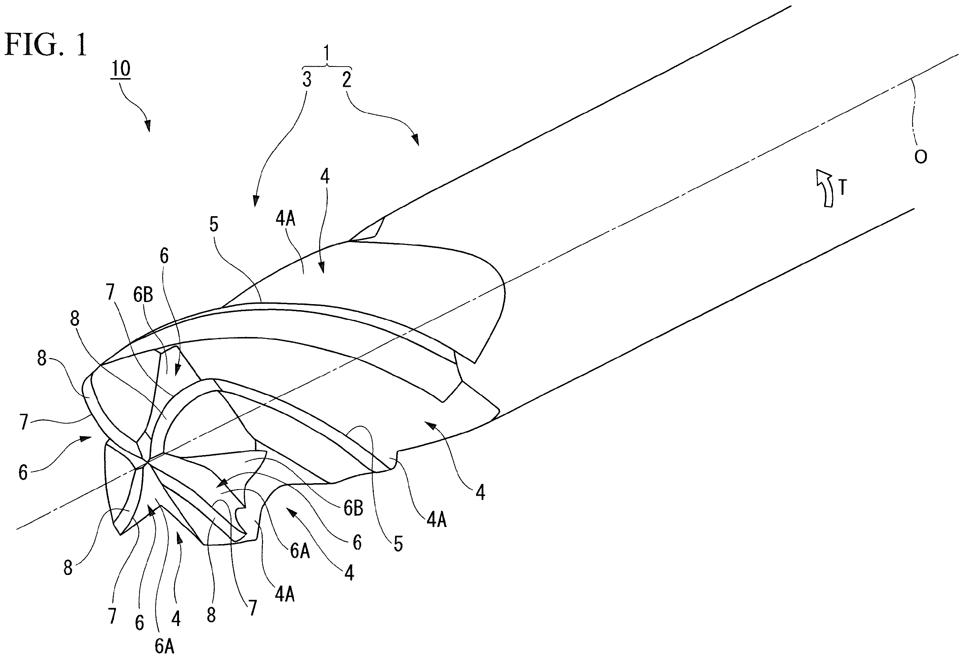

FIGS. 1 to 5 illustrate an embodiment of the invention.

As illustrated in FIGS. 1 to 5, a radius end mill 10 includes the end mill body 1 in the present embodiment.

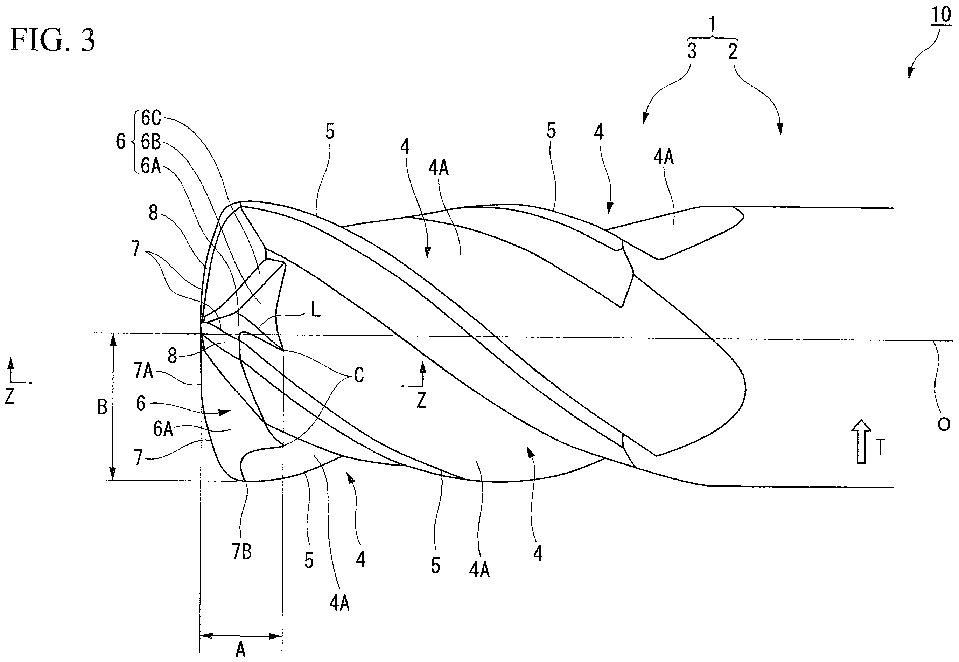

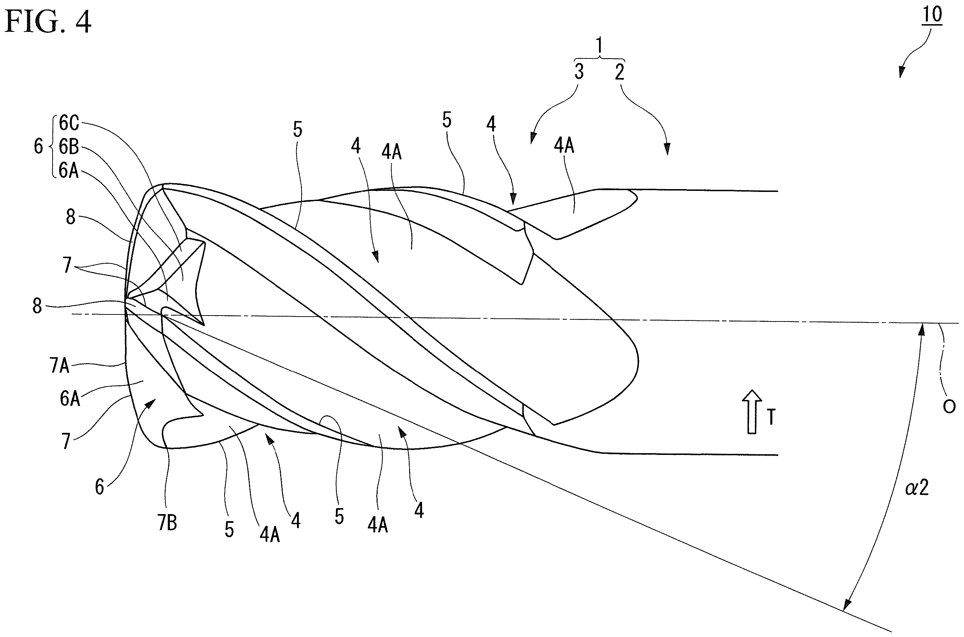

The end mill body 1 is integrally formed in a substantially columnar shape centered on an axial line O, using hard materials, such as cemented carbide. A posterior end portion (an upper right portion of FIG. 1 and a right portion of FIGS. 3 and 4) of the end mill body 1 serves as a columnar shank portion 2. A tip portion (a lower left portion of FIG. 1 and a left portion of FIGS. 3 and 4) of the end mill body 1 serves as a cutting portion 3.

In such a radius end mill 10, a workpiece is subjected to cutting work by the cutting portion 3 while the shank portion 2 is gripped by a main shaft of a machine tool and is rotated around the axial line O.

In addition, a direction in which the radius end mill 10 rotates around the axial line O is referred to an end mill-rotational direction T.

A plurality of (four in the present embodiment) chip discharge grooves 4, which are twisted to a side opposite to the end mill-rotational direction T around the axial line O from a tip of the end mill body 1 toward a posterior end side thereof, are formed at regular intervals in a circumferential direction in the above cutting portion 3.

Outer-peripheral-side ridge portions of wall faces 4A of the chip discharge grooves 4 that face the end mill-rotational direction T are respectively formed with peripheral cutting edges 5 having the wall faces 4A as rake faces.

In addition, each wall face 4A forms a concave curve that is recessed to the side opposite to the end mill-rotational direction T in a section orthogonal to the axial line O. That is, each wall face 4A is formed in a curved manner so as to have a concave curve that is recessed to the side opposite to the end mill-rotational direction T as seen in the section orthogonal to the axial line O.

Therefore, in the present embodiment, the four peripheral cutting edges 5 are formed at regular intervals in the circumferential direction, similar to the chip discharge grooves 4, and a rotational locus that the peripheral cutting edges 5 draw around the axial line O becomes a single cylindrical surface centered on the axial line O.

Additionally, a recessed groove-shaped gash 6 that extends toward the posterior end side as it becomes closer to an outer peripheral side of the end mill body 1 from the vicinity of the axial line O is formed at a tip portion of each chip discharge groove 4. More specifically, the gash 6 extends toward the posterior end side so as to cut out a groove bottom of the chip discharge groove 4 at the tip portion of the end mill body 1.

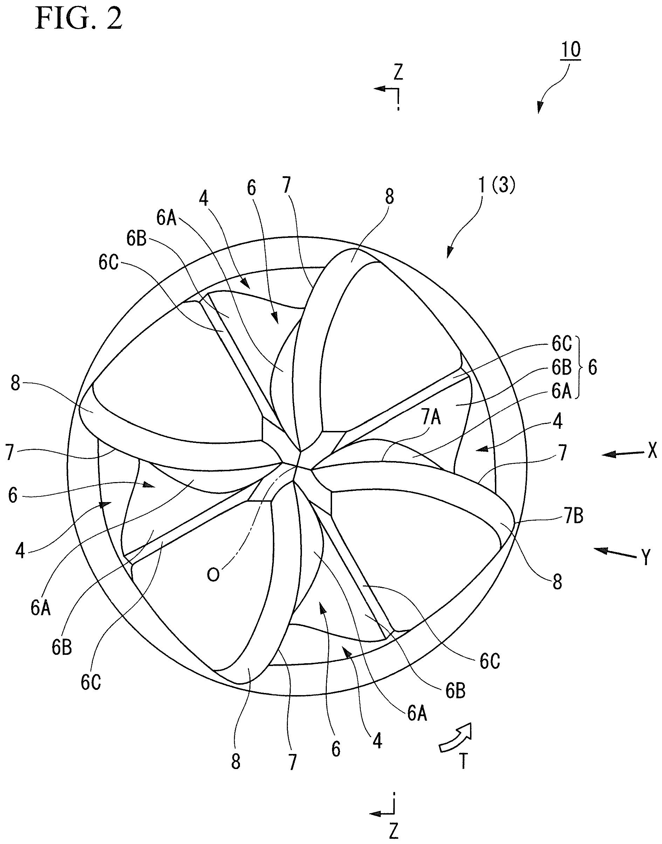

A wall face 6A of each of the gashes 6 that faces the end mill-rotational direction T is formed so as to extend toward the side opposite the end mill-rotational direction T while being curved in a convex shape as it becomes closer to the outer peripheral side as illustrated in FIG 2 in the present embodiment. An end cutting edge 7 having the wall face 6A as a rake faces is formed at a tip-side ridge portion of the wall face 6A.

Moreover, a bottom face 6B that continues to the end mill-rotational direction T side with respect to the wall face 6A and faces a tip side in a direction of the axial line O, and a wall face 6C that further continues to the end mill-rotational direction T side with respect to the bottom face 6B and faces the side opposite to the end mill-rotational direction T are formed in each gash 6.

Moreover, a tip surface of the end mill body 1 that continues to the end mill-rotational direction T side with respect to the wall face 6C serves as a flank face 8 of the end cutting edge 7 adjacent to the end mill-rotational direction T side with respect to the end cutting edge 7 that continues to the gash 6 in which the wall face 6C is formed.

A clearance angle is given to the flank face 8 so as to incline toward the posterior end side of the end mill body 1 as it becomes closer to the side opposite to the end mill-rotational direction T.

Additionally, as illustrated in FIGS. 3 and 4, the flank face 8 is curvedly formed in a convex shape so as to face the posterior end side after protruding slightly to the tip side from the vicinity of the axial line O toward the outer peripheral side in the tip portion of the end mill body 1.

Along with this, as illustrated in FIGS. 3 and 4, the end cutting edge 7 is also formed in imitation of the flank face 8. Specifically, the end cutting edge 7 has a protruded end 7A that protrudes toward the tip side in the direction of the axial line O at a position slightly apart from the axial line O to the outer peripheral side. Also, the end cutting edge 7 is formed in a convexly curved shape that extends in a gently curved manner so as to face the posterior end side as it becomes closer to the outer peripheral side from the protruded end 7A.

Therefore, the end cutting edge 7 is formed so as to extend to the posterior end side as it becomes closer to the outer peripheral side of the end mill body 1 while a rotational locus thereof around the axial line O draws a protruded curved face from the protruded end 7A.

In this way, the end cutting edge 7 that extends to the outer peripheral side of the tip portion of the end mill body 1 is in contact with the peripheral cutting edge 5 via a contact point 7B at an outer peripheral end thereof.

On a tip inner-peripheral side of the end mill body 1 around the protruded end 7A, the end cutting edge 7 is formed such that the curvature radius of a convex curve formed by a section along the axial line O of the protruded curved face formed by the end cutting edge 7 in the rotational locus around the axial line O becomes greater than that on a tip outer-peripheral side around the contact point 7B.

That is, the above protruded curved face is formed so as to have a convex curve where a curvature radius in an inner portion (for example, the protruded end 7A) located closer to the axial line O side than the tip outer-peripheral side is greater than a curvature radius on the tip outer-peripheral side (for example, the contact point 7B) of the end mill body 1, in a sectional view along the axial line O.

For example, in the case of a radius end mill of which the external diameter is 6.0 mm, that is, a radius B (mm) from the axial line O to the contact point 7B between the end cutting edge 7 and the peripheral cutting edge 5 is 3.0 mm, the curvature radius of the above convex curve formed by the section of the rotational locus of the end cutting edge 7 at the protruded end 7A is 5.0 mm, while the curvature radius of the above convex curve formed by the section of the rotational locus of the end cutting edge 7 at the contact point 7B is set to be 0.6 mm.

The end cutting edge 7 is formed such that a plurality of (two in the present embodiment) circular arcs with that such different curvature radii are smoothly in contact with each other (are connected to each other).

While at the same time, the wall face 6A (the rake face of the end cutting edge 7) of the gash 6 that faces the end mill-rotational direction T is formed in the shape of a twisted surface such that the inclination thereof with respect to the axial line O in a sectional view parallel to the axial line O as it becomes closer to the outer peripheral side of the end mill body 1 becomes larger in a direction facing the side opposite to the end mill-rotational direction T as it becomes closer to the posterior end side of the end mill body 1.

That is, when the wall face 6A is cut by a section ZZ illustrated in FIG. 2 parallel to the axial line O orthogonal to the end cutting edge 7, an axial rake angle of the wall face 6A formed with respect to the axial line O becomes gradually larger to a positive angle side as it becomes closer to the outer peripheral side.

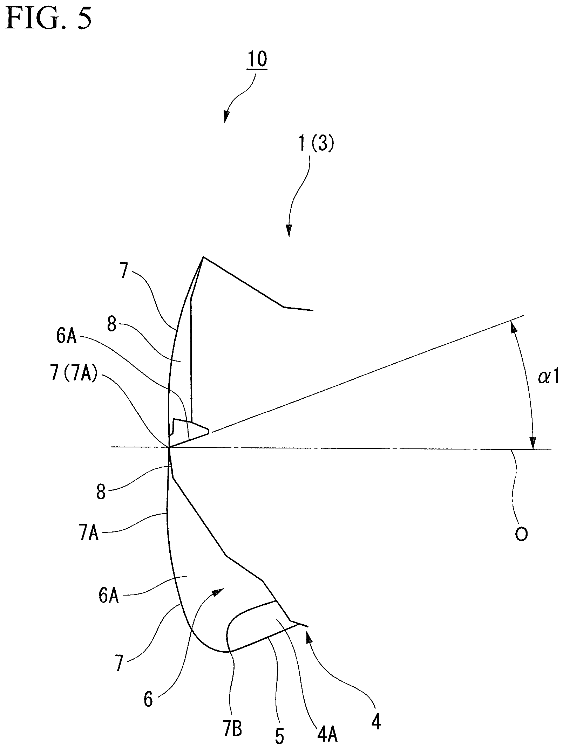

In addition, FIG. 5 is a sectional view at the protruded end 7A of the end cutting edge 7. In the present embodiment, an axial rake angle α1 (°) of the end cutting edge 7 at the protruded end 7A is set to be a negative angle.

Therefore, the axial rake angle of the end cutting edge 7 becomes a maximum on the positive angle side at the contact point 7B (the outer peripheral end of the end cutting edge 7) between the end cutting edge 7 and the peripheral cutting edge 5. In the present embodiment, the axial rake angle of the end cutting edge 7 is equal to the axial rake angle of the peripheral cutting edge 5, that is, the twist angle of the peripheral cutting edge 5, at the contact point 7B. In addition, an axial rake angle α2 (°) of the end cutting edge 7 at the contact point 7B is set to be a positive angle.

Additionally, as the wall face 6A is formed in the shape of a twisted surface in this way, in the present embodiment, an intersection ridgeline L between the wall face 6A and the bottom face 6B of the gash 6 extends to the posterior end side beyond the contact point 7B in the direction of the axial line O. Also, as the intersection ridgeline L intersects the wall face 4A (the rake face of the peripheral cutting edge 5) of the chip discharge groove 4 that faces the end mill-rotational direction T, at the intersection point C, the gash 6 is formed in a cut-upward shape.

In addition, the intersection point C is the position of a most-posterior end of the gash 6.

In the radius end mill 10 of the present embodiment, a gash depth angle 0 (°) given (calculated) by θ = tan⁻¹(A/B) on the basis of a distance A (mm) in the direction of the axial line O from the protruded end 7A of the end cutting edge 7 in the direction of the axial line O to the intersection point C serving as the most-posterior end of the gash 6, and a radius B (mm) from the axial line O to the contact point 7B between the peripheral cutting edge 5 and the end cutting edge 7 is set to be 50° or less.

Moreover, a sum (θ (°) + α (°)) of the gash depth angle θ (°) and an axial rake angle difference α(°) = (α2 (°) - α1 (°)) between the axial rake angle α2 (°) of the end cutting edge 7 at the contact point 7B and the axial rake angle α1 (°) of the end cutting edge 7 at the protruded end 7A is set to be 60° or more.

In such a radius end mill 10, the gash depth angle 8 (°) represents the depth of the gash 6 to the posterior end side in the direction of the axial line O with respect to the radius B (mm) of the end cutting edge 7. Also, since the gash depth angle θ (°) is set to be as small as 50° or less, the gash 6 is formed to be relatively shallow.

For this reason, even in a case where the axial rake angle α2 (°) at the contact point 7B (the outer peripheral end of the end cutting edge 7) between the end cutting edge 7 and the peripheral cutting edge 5 is enlarged on the positive angle side, the width of the gash 6 in the circumferential direction can be prevented from becoming too large.

Therefore, the gash 6 of the end cutting edge 7 can be prevented from reducing the thickness of the tip portion of the end mill body 1 connected to the side, opposite to the end mill-rotational direction T, of another end cutting edge 7 or peripheral cutting edge 5 adjacent thereto the end mill-rotational direction T side. Hence, it is possible to prevent a situation in which the strength of the other end cutting edge 7 or peripheral cutting edge 5, is impaired, or the gash 6 interfering with the flank face 8 of the other end cutting edge 7 or the flank face of the peripheral cutting edge 5. In addition to this, resistance can be reduced by sharpening the end cutting edge 7 at the contact point 7B, and chipping or the like at the contact point 7B can be prevented by suppressing occurrence of vibration.

In addition, it is desirable that the gash depth angle θ (°) is set to be 15° or more because the absolute capacity of the gash 6 become insufficient if this gash depth angle is too small.

While at the same time, the sum (θ (°) + α (°)) of the gash depth angle θ (°) and the axial rake angle difference α (°) = (α2 (°) - α1 (°)) between the axial rake angle α2 (°) of the end cutting edge 7 at the contact point 7B and the axial rake angle α 1 (°) at the protruded end 7A of the end cutting edge 7 may be set to be 60° or more.

Therefore, in the case where a maximum value of the gash depth angle θ (°) is 50°, the axial rake angle difference α (°) is set to 10° or more. That is, 10° or more of the axial rake angle difference α (°) is secured between the protruded end 7A of the end cutting edge 7 and the contact point 7B.

For this reason, the wall face 6A (the rake face of the end cutting edge 7) of the gash 6 that faces the end mill-rotational direction T can be formed in the shape of a twisted surface as described above.

Therefore, chips, which are generated by the end cutting edge 7 and scratch the wall face 6A, receive stress from the wall face 6A and are bent. For that reason, chips are discharged by being rapidly separating from the wall face 6A and sent out to the chip discharge groove 4.

Therefore, according to the radius end mill 10 of the above configuration, even if the gash 6 becomes shallow by making the gash depth angle θ (°) small as described above, good chip discharge performance can be guaranteed, and chips can be prevented from getting clogged within the gash 6. For that reason, an increase in resistance caused by chip clogging can be suppressed, and it is possible to perform stable cutting work.

In addition, in order to much more reliably guarantee good chip discharge performance in this way, it is desirable that the sum (θ (°) + α (°)) of the gash depth angle θ (°) and the axial rake angle difference α (°) = (α2 (°) - α1 (°)) is 80 degrees or more.

### Examples

Next, effects of the invention will be demonstrated taking examples of the invention.

In the present example, eight types of radius end mills in which the gash depth angle θ (°) was 50° or less and the sum (θ (°) + α (°)) of the gash depth angle θ (°) and the axial rake angle difference α (°) was 60° or more were manufactured on the basis of the above-described embodiment.

Then, cutting tests were performed on the eight types of radius end mills, respectively, cutting resistance in that case (a resultant force of three forces) was measured, and the presence/absence or the like of chip clogging was confirmed. As these Examples 1 to 8, the axial rake angle α2 (°) of the end cutting edge 7 at the contact point 7B of the end cutting edge 7, the axial rake angle α1 (°)at the protruded end 7A, and the axial rake angle difference α (°) are altogether shown in Table 1.

In addition, in Examples 1 to 4 among Examples 1 to 8, the sum (θ (°) + α (°)) of the gash depth angle θ (°) and the axial rake angle difference α (°) is set to be 80° or more.

Additionally, as comparative examples over these Examples 1 to 8, a total of four types of radius end mills including three types of radius end mills in which the sum (θ (°) + α (°)) of the gash depth angle θ (°) and the axial rake angle difference α (°) is 50° that is less than 60°, and one type of a radius end mill in which the gash depth angle θ (°) is 55° exceeding 50° were also manufactured.

Cutting tests are performed on the same conditions as Examples 1 to 8, with the four types of radius end mills as Comparative Examples 1 to 4. Similarly, the results are shown in Table 1 together with the axial rake angles α2 (°) and α1 (°) and the axial rake angle difference α (°).

In addition, the radius end mills of these Examples 1 to 8 and Comparative Examples 1 to 4 are made of cemented carbide in which (Al, Ti, Si) N coating is performed on the surface of the end mill body 1, and as described in the above embodiment, the external diameter is set to be 6.0 mm (the radius B (mm) is 3.0 mm).

More specifically, four flute radius end mills in which the curvature radius at the contact point 7B of the above convex curve formed by the section along the axial line O of the rotational locus around the axial line O of the end cutting edge 7 is 0.6 mm and the curvature radius at the protruded end 7A is 5.0 mm are provided.

That is, four-type of radius end mills in which the protruded curved face that the rotational locus of the end cutting edge 7 draws around the axial line O is formed so as to have a convex curve in which the curvature radius at the contact point 7B is 0.6 mm and the curvature radius at the protruded end 7A is 5.0 mm in the sectional view along the axial line O are provided.

Moreover, a cutting edge length from the protruded end 7A to a posterior end of the peripheral cutting edge 5 is set to be 9 mm, and the clearance angle of the end cutting edge 7 and the peripheral cutting edge 5 is 15°.

Additionally, in the cutting tests, pockets were formed in a workpiece (hardness 60HRC) that made of SKD11 by contour line-working with a cut of 0.3 mm in the direction of the axial line O and a pick feed of 4.5 mm. In that case, the spindle speed of the end mill body 1 was 2500 min⁻¹, and the feed rate thereof was 4500 mm/min.

**[Table 1]**

| | Gash Depth Angle θ (°) | θ(°) +α(°) | Axial Rake Angle (°) | | | Results | Cutting Resistance (Resulting Force of Three Forces) |
|---|---|---|---|---|---|---|---|
| | | | Angle Difference α(α2-α1) | Protruded End (α1) | Contact Point (α2) | | |
| Example 1 | 40° | 100° | 60° | -20° | 40° | A | 652 |
| Example 2 | 40° | 80° | 40° | -10° | 30° | A | 640 |
| Example 3 | 30° | 80° | 50° | -20° | 30° | A | 691 |
| Example 4 | 50° | 80° | 30° | -10° | 20° | A | 716 |
| Example 5 | 50° | 60° | 10° | 10° | 20° | B | 805 |
| Example 6 | 40° | 60° | 20° | -10° | 10° | B | 827 |
| Example 7 | 30° | 60° | 30° | -10° | 20° | B | 833 |
| Example 8 | 20° | 60° | 40° | -20° | 20° | B | 889 |
| Comparative Example 1 | 40° | 50° | 10° | 0° | 10° | C | 1350 |
| Comparative Example 2 | 30° | 50° | 20° | 0° | 20° | C | 1488 |
| Comparative Example 3 | 20° | 50° | 30° | -10° | 20° | C | 1613 |
| Comparative Example 4 | 55° | 115° | 60° | -20° | 40° | C | - |

From the results of this Table 1, in Comparative Examples 1 to 3 in which the sum (θ (°) + α (°)) of the gash depth angle θ (°) and the axial rake angle difference α (°) is 50°, not only bending of chips is little but also the gash depth angle θ (°) is small and the gash 6 is shallow, with respect to the bending of these chips. Therefore, the results that the chip clogging occurred and the cutting resistance increased were brought about in all of the comparative examples.

Additionally, in Comparative Example 4 in which the gash depth angle θ (°) is 55°, the thickness of the end mill body 1 on the side opposite to the end mill-rotational direction T of the peripheral cutting edge 5 became too small, cutting blade strength was insufficient, and the end mill body 1 was damaged, so that the cutting resistance could not be measured.

From these results, "C" representing "poor" when poor results were obtained is described in columns for the results of Comparative Examples 1 to 4 in Table 1.

With respect to these Comparative Examples 1 to 4, in Examples 1 to 8 in which the gash depth angle 0 (°) is set to be 50° or less, and the sum (θ (°) + α (°)) of the gash depth angle θ (°) and the axial rake angle difference α (°) is set to be 60° or more, the cutting resistance was suppressed on a small scale by guaranteeing good chip discharge performance.

Particularly, in Examples 1 to 4 in which the sum (θ (°) + α (°)) of the gash depth angle θ (°) and the axial rake angle difference α (°) is 80° or more, chips could be sufficiently bent, and the depth of the gash 6 could also be secured, so that the cutting resistance decreased remarkably.

From these results, "A" representing "excellent" when excellent results were obtained is described in columns for the results of Examples 1 to 4 in Table 1.

Additionally, in Examples 5 to 7 in which the axial rake angle difference α (°) is within a range of 10° to 30°, the bending of chips is smaller compared to Examples 1 to 4. However, the gash depth angle θ (°) is within a range of 50° to 30°. For that reason, in the respective Examples 5 to 7, not only the bending of chips was larger compared to Comparative Examples 1 to 3 with the same axial rake angle difference α (°) but also the gash 6 also was deep. Therefore, chip clogging was not caused.

Meanwhile, in Example 8 in which the gash depth angle θ (°) was 20° that was the same as that of Comparative Example 3, the axial rake angle difference α (°) was as large as 40° and chips could be sufficiently bent. Therefore, even if the depth of the gash 6 was small, chip clogging did not occur too.

From these results, "B" representing "good" when good results were obtained is described in columns for the results of Examples 5 to 8 in Table 1.

### Industrial Applicability

According to the invention, even in a case where even the outer peripheral end of the end cutting edge is used for cutting, it is possible to perform stable cutting work that prevents chipping or the like resulting from vibration. Therefore, the invention has industrial applicability.

### Reference Signs List

1: END MILL BODY
2: SHANK PORTION
3: CUTTING PORTION
4: CHIP DISCHARGE GROOVE
4A: WALL FACE OF CHIP DISCHARGE GROOVE 4 THAT FACES END MILL-ROTATIONAL DIRECTION T (RAKE FACE OF PERIPHERAL CUTTING EDGE 5)
5: PERIPHERAL CUTTING EDGE
6: GASH
6A: WALL FACE OF GASH 6 THAT FACES END MILL-ROTATIONAL DIRECTION T (RAKE FACE OF END CUTTING EDGE 7)
6B: BOTTOM FACE OF GASH 6 THAT FACES TIP SIDE IN DIRECTION OF AXIAL LINE O
6C: WALL FACE OF GASH 6 THAT FACES SIDE OPPOSITE TO END MILL-ROTATIONAL DIRECTION T
7: END CUTTING EDGE
7A: PROTRUDED END OF END CUTTING EDGE 7
7B: CONTACT POINT BETWEEN END CUTTING EDGE 7 AND PERIPHERAL CUTTING EDGE 5 (OUTER PERIPHERAL END OF END CUTTING EDGE 7)
8: FLANK FACE OF END CUTTING EDGE 7
10: RADIUS END MILL
O: AXIAL LINE OF END MILL BODY 1
T: END MILL-ROTATIONAL DIRECTION
L: INTERSECTION RIDGELINE BETWEEN WALL FACE 6A AND BOTTOM FACE 6B OF GASH 6
C: INTERSECTION POINT BETWEEN INTERSECTION RIDGELINE L AND WALL FACE 4A (MOST-POSTERIOR END OF GASH 6)
A: DISTANCE IN DIRECTION OF AXIAL LINE O FROM PROTRUDED END 7A OF END CUTTING EDGE 7 TO MOST-POSTERIOR END C OF GASH 6 IN DIRECTION OF AXIAL LINE O
B: RADIUS FROM AXIAL LINE O TO CONTACT POINT 7B BETWEEN PERIPHERAL CUTTING EDGE 5 AND END CUTTING EDGE 7
α1: AXIAL RAKE ANGLE AT PROTRUDED END 7A OF END CUTTING EDGE 7
α2: AXIAL RAKE ANGLE AT CONTACT POINT 7B OF END CUTTING EDGE 7

## Claims

1. A radius end mill comprising:
an end mill body that rotates around an axial line;
a chip discharge groove that is formed at an outer periphery of a tip portion of the end mill body and is twisted to a side opposite to an end mill-rotational direction around the axial line from a tip of the end mill body toward a posterior end side thereof;
a peripheral cutting edge that is formed at an outer-peripheral-side ridge portion of a wall face of the chip discharge groove that faces the end mill-rotational direction;
a recessed groove-shaped gash that is formed at a tip portion of the chip discharge groove and extends toward the posterior end side as it becomes closer to an outer peripheral side of the end mill body; and
an end cutting edge that is formed at a tip-side ridge portion of a wall face of the gash that faces the end mill-rotational direction and extends to the posterior end side as it becomes closer to the outer peripheral side of the end mill body, thereby coming in contact with a tip of the peripheral cutting edge,
wherein the end cutting edge is formed such that a rotational locus thereof around the axial line draws a protruded curved face,
wherein the protruded curved face is formed so as to have a convex curve where a curvature radius in an inner portion located closer to an axial line side than a tip outer-peripheral side of the end mill body is greater than a curvature radius on the tip outer-peripheral side, in a sectional view along the axial line,
wherein a gash depth angle θ (°) calculated by θ = tan⁻¹ (A/B) on the basis of a distance A (mm) in the axial direction from a protruded end of the end cutting edge located on a tip side in the axial direction to a most-posterior end of the gash and a radius B (mm) from the axial line to a contact point between the peripheral cutting edge and the end cutting edge is set to be 50° or less, and
wherein a sum (θ (°) + α (°)) of the gash depth angle θ (°) and an axial rake angle difference α (°) = (α2 (°) - α1 (°)) between an axial rake angle α2 (°) of the end cutting edge at the contact point and an axial rake angle α1 (°) of the end cutting edge at the protruded end is set to be 60° or more.

2. The radius end mill according to Claim 1,
wherein the sum (θ (°) + α (°)) is set to be 80° or more.
